# NEW EUROPEAN PATENT SPECIFICATION

(11) **EP 1 479 187 B2**
(45) Date of publication and mention of the opposition decision: **04.01.2017**
(45) Mention of the grant of the patent: 19.12.2012
(21) Application number: 03702946.9
(22) Date of filing: 26.02.2003
(51) Int. Cl.: H04L 9/32

(54) **CONTROLLING ACCESS LEVELS IN PHONES BY CERTIFICATES**
STEUERUNG VON ZUGANGSEBENEN IN FERNSPRECHERN DURCH ZERTIFIKATE
COMMANDE DE NIVEAUX D'ACCES DANS DES TELEPHONES AU MOYEN DE CERTIFICATS DE ROLE

(30) Priority: 28.02.2002 US 90426
(43) Date of publication of application: 24.11.2004
(73) Proprietor: Nokia Corporation, 02610 Espoo (FI)
(72) Inventor: PAATERO, Lauri, FIN-00970 Helsinki (FI)
(74) Representative: Derry, Paul Stefan
(86) International application number: PCT/IB2003/000718
(87) International publication number: WO 2003/073686

(56) References cited:
- EP-A- 1 175 039
- US-A- 5 659 616
- US-A1- 2001 021 928
- US-A1- 2001 021 928
- US-A1- 2002 078 380
- US-A1- 2002 152 086
- CORRADI A ET AL: "Mobile agents protection in the Internet environment", COMPUTER SOFTWARE AND APPLICATIONS CONFERENCE, 1999. COMPSAC '99. PROC EEDINGS. THE TWENTY-THIRD ANNUAL INTERNATIONAL PHOENIX, AZ, USA 27-29 OCT. 1999, LOS ALAMITOS, CA, USA,IEEE COMPUT. SOC, US, 27 October 1999 (1999-10-27), pages 80-85, XP010549478, DOI: 10.1109/CMPSAC.1999.812680 ISBN: 978-0-7695-0368-4

## Description

### Technical Field:

The present invention is directed to control of security level functionality in devices and in particular, to control security critical functionality in wireless devices.

### Background of the Invention:

Wireless devices and in particular mobile phones continue to have an increasing number of security critical functions built into the devices. Such functions include the ability to sign data, to present protected content using digital rights management (DRM) and similar activities. Some of these features are currently being designed into wireless telephones.

It is contemplated in the future that every mobile phone will have a permanent identity built into the phone. Such an identity can be used to prevent modification of International Mobile station Equipment Identity (IMEI) commonly used with mobile phones. Mobile phones also will have a secret private key for use in public key infrastructure(s) (PKIs). Furthermore, code signing will be used in mobile phones to control execution or installation of security related computer code. Most security critical computer code in mobile phones will be accepted by phone firmware only if it has been signed by a key certified by a Certification Authority (CA root key). In addition, third party developers of applications and the like will from time to time have keys and certificates for creating certain types of programs. It is therefore desirable if these security related issues could be managed at the mobile phone level specific to individual mobile telephones, rather than exclusively at the user (e.g. developer) level.

In the past, it has normally not been possible to effectively prevent an owner or possessor of a mobile phone from replacing code within that mobile phone. The only protection afforded mobile phones in the past has been with regard to remote replacement of code; particularly mechanisms to prevent remote attackers from changing code in phones. However, as noted, there has not been good protection to prevent users of mobile phones from changing the code within the phone. From a practical point of view, it has only been due to the obscurity of the design of mobile phones and the confidentiality of mechanisms within the phones that have made mobile phones relatively difficult to attack by the user of the phone. Unfortunately, such mechanisms also make it difficult for the phone manufacturer to specifically allow certain third parties to have access to at least portions of the code within the phone.

In particular, in many cases a user or some other third party would like to replace code in a mobile phone with other code to circumvent some security mechanism. For example, users might want to replace what is known as International Mobile station Equipment Identity (IMEI) information which is a standardized procedure of equipment manufacturers to identify a mobile station similar to a serial number identification. Thus a user might want to replace the IMEI code in the phone in order to perform illegal services with that phone (such as making telephone calls without payment). At the same time, mobile telephone manufacturers must be able to write code and test that code in order to develop their products efficiently. Thus, the mobile telephone manufacturer may want code having certain modifications used and/or tested by a special group of users with regard to particular mobile phones.

In the past, lowering the security level of a particular mobile phone has been achieved by using some sort of hardware switch or other hardware operation. This type of mechanism cannot be used to efficiently protect against the owner or possessor of a phone from tampering with the phone. In addition, such a mechanism tends to support only a coarse level of security control such as an on/off functionality.

It would be advantageous to allow certain third parties, such as software developers, to have access to specific mobile phones with regard to loading new software code therein, as well as having that software installed on the phone and possibly later executed on the phone. It is to these desired capabilities that the present invention is directed.

US Patent Application US 2001/0021928 to Ludwig et al. discloses the use of role certificates for authorizing transactions inside a computer network.

A. Corradi, R. Montanari, "Mobile agents protection in the Internet environment", in Proceedings of the Twenty-Third Annual International Computer Software and Applications Conference, COMPSAC'99, discloses SOMA, a paradigm for managing execution permissions of Mobile Agents in a network using role certificates.

It is to address all of these specific issues that the present invention is directed.

### Summary of the Invention:

The present invention is directed to a method and apparatus to allow at least one party to perform certain activity(ies) with respect to a device, wherein the device has a role certificate embedded therein, and further wherein that role certificate specifies at least one certain activity which can be activated within the device by at least one party. In particular, the invention is directed to role certificates for mobile phones so as to control security level access by associated phone firmware. In this way the mobile phone is controlled on an individual, per phone basis.

In one implementation, the role certificate controls the acceptance of computer code for use in a specific mobile phone. The computer code can be test code, production code or any type of special code for some operation. The role certificate in this situation indicates what type or types of code can be downloaded, installed and/or run on a mobile phone, thus determining the possible roles that the phone may adopt. The role certificate can indicate not only the types of code that can be downloaded to the phone but also may indicate that such code be written (or delivered) by a specific individual(s) or group, also identified in the role certificate. Different role certificates in the same phone may provide for different activities to be performed on the phone by different entities. Great flexibility is thereby achieved through use of these role certificates.

Another application of the role certificate is control debugging facilities associated with a mobile telephone. Such debugging facilities can be built into the phone or connected to the phone through a port.

The role certificates are in turn controlled by a Certification Authority and thus the certificates can be distributed to third parties to allow third parties to perform specific operations on a mobile phone. For instance, role certificates can be distributed to third party software developers so as to allow those developers to execute low-level debugging of the code on specific mobile phones used for debugging. Such distribution of the role certificates would normally be through bundling of the certificates to the developer with a software development kit (SDK). The role certificate(s) could also be embedded within the device at the time of manufacture or later by the entity that generates the role certificate (typically a root CA).

To verify the role certificate, the mobile phone further stores information regarding the public key corresponding to the private key used by the CA to sign the role certificate. This public key information is typically a hash value of the CA public key. Since this public key information is in a tamper resistant portion of memory within the phone, only a corresponding role certificate can be verified and used in that particular phone once the CA public key is received.

### Brief Description of the Drawings:

For a fuller understanding of the nature and objects of the present invention, reference should be made to the following detailed description, taken in conjunction with the following drawings in which:
- Figure 1: is a block diagram of a mobile phone device which supports role certificate usage according to the present invention.
- Figure 2: is a flow chart showing the steps for implementing a role certificate for a device which allows a third party to perform at least one activity with respect to the device.

### Best Mode for Carrying Out the Invention:

As the wireless infrastructure throughout the world has advanced, it has become apparent that mobile phones will have a need for increasing the number of security critical functions that they can perform. Such functionality can include the signing of data, presenting protective content using digital rights management (DRM), and other similar type activities. In the future, every mobile phone will probably have a permanent identity built into the phone. This identity can be used to prevent modification of International Mobile station Equipment Identity (IMEI) based identity which is widely used to identify mobile devices for wireless network service providers. In addition, mobile phones will have a secret key for use in public key infrastructure(s) (PKIs). The ability to sign code will be used in mobile phones to control execution or installation of security related computer code. Most security critical computer code in mobile phones will be accepted by phone firmware only if it has been signed by key certified by a Certification Authority (CA). In addition, third party developers will, in many situations, have keys and certificates for creating certain types of programs.

The present invention is directed to the use of a mobile phone specific role certificate(s) so as to control security level access to that mobile phone which is enforced by the associate phone firmware. Such a mobile phone specific role certificate provides individual mobile phone security control. Although specifically directed to mobile phones, the method and apparatus of the present invention is generally applicable to any device.

It is important to note that such mobile phone specific role certificates are different from certificates commonly used in network infrastructures. Normally role certificates are given for a certain entity, such as a user or a device, in order to authorize that entity to perform some function to others based upon role membership. Thus, a traditional role certificate might authorize a third party to create test code for a mobile phone. However, in the case of a mobile phone, no one should be allowed to create test code for an arbitrary phone. Thus the present invention uses a mobile phone (device) specific role certificate to allow others to perform some activity on a specific device, such as the mobile phone. When the device has a role certificate such as that used for a development test phone, developers, including third party developers, would typically be allowed to create and run code in that specific test phone without restrictions.

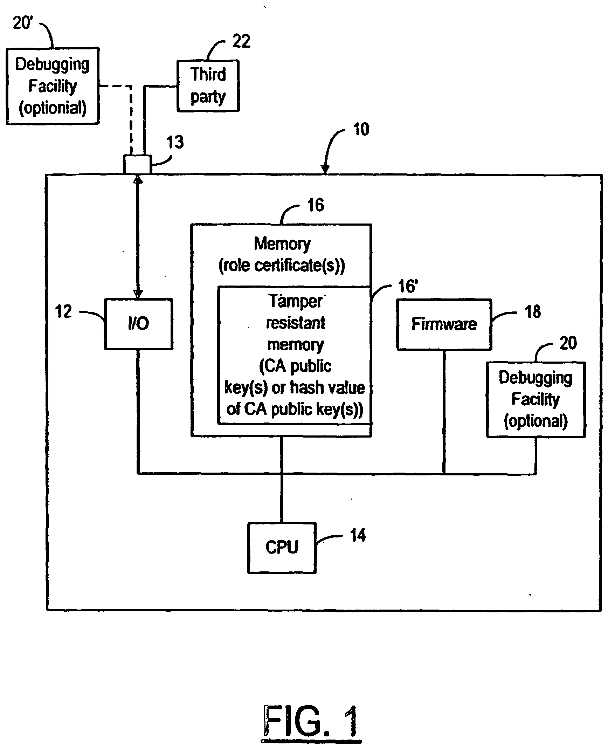

Referring now to Figure 1, a specific mobile phone **10** is shown in a generalized block diagram. It is there seen to contain some form of input/output module **12**, a port **13**, a central processing unit (CPU) **14**, memory **16**, firmware **18**, and an optional debugging facility **20**. Port **13** can optionally connect to an external debugging facility **20'.** A third party (TP) **22** can also interact with the phone through port **13.**

Port **13** is connected to the I/O module for communicating with the outside world. This port can be a wireless antenna, an infrared port, a keyboard, a connector (e.g. an RS 232 port) or other interface. The memory will typically include at least some tamper resistant memory **16'**. In the present invention, a role certificate is issued by a Certification Authority (CA) and as is well-known in the art, such a certificate would contain various components such as those enumerated in ITU-T Recommendation X.509, including the name of the Certification Authority that issued the certificate, a serial number, an expiration date, as well as other information. In particular, the role certificate contains information regarding one or more permitted activities. The role certificate is signed by the CA that created the certificate. Such signing provides the mechanism for allowing an entity (such as the mobile phone or other device) to have confidence in the authenticity of the role certificate since the role certificate can be verified only with the CA's corresponding public key bound to the CA's private key used to sign the role certificate. An overview of such certificates can be found in a Netscape Communications document entitled, "Introduction to Public-Key Cryptology" which can be obtained on the Internet at http: //developer.netscape.com/docs/manuals/security/pkin/contents. htm (last updated as of the time of this application filing on 9 October 1998).

The CA public key is typically stored in the tamper resistant portion of memory **16'**. Preferably, a hash of the CA public key is stored in the tamper resistant memory. Then the CA public key, which can be later sent to the device, can be verified by hashing this received CA public key (using the same hashing algorithm used to initially hash the CA public key) and comparing this hash value to that stored in the tamper resistant memory. If the hash values match, the received CA public key is authenticated and can be used to verify the role certificate. The role certificates are typically stored in memory **16**.

Thus an operation security authority such as a mobile phone manufacturer can issue role certificates to, for instance, third party software developers allowing such software developers to perform certain activities with respect to specific mobile phones. The role certificate can be embedded in memory of the device at the time the device is manufactured or may be downloaded later via I/O module **12**. The CA public key(s) (or hash value of such key(s)) would typically be stored in the tamper resistant memory **16'** at the time the device is manufactured. It should be noted that it is possible, if desired, to generate different role certificates using the same CA private key for signing. In such a case, the CA public key within a device can be used to verify any of these role certificates.

It should be noted that a role certificate is typically to be used with one device or possibly a group of devices all associated with the same entity. For instance, a role certificate may be used on a group of mobile phones all owned by a specific company. In each case, the public key (or preferably the hash value of the public key) corresponding to the CA private key used to sign the role certificate is stored in a tamper resistant portion of memory **16'** in each device.

The mobile phone upon receipt of a certificate transmitted to it via I/O module 12 (or previously stored at the time of manufacture) would, through execution of associated firmware code, attempt to verify the certificate using the CA public key. If verified, the phone determines what activities can be performed on itself. If the role certificate can be verified using the CA public key, then a specified activity or activities may be performed on that phone by any third party (if no third parties are identified in the role certificate) or by a specific third party(ies) if they are identified in the role certificate (see below).

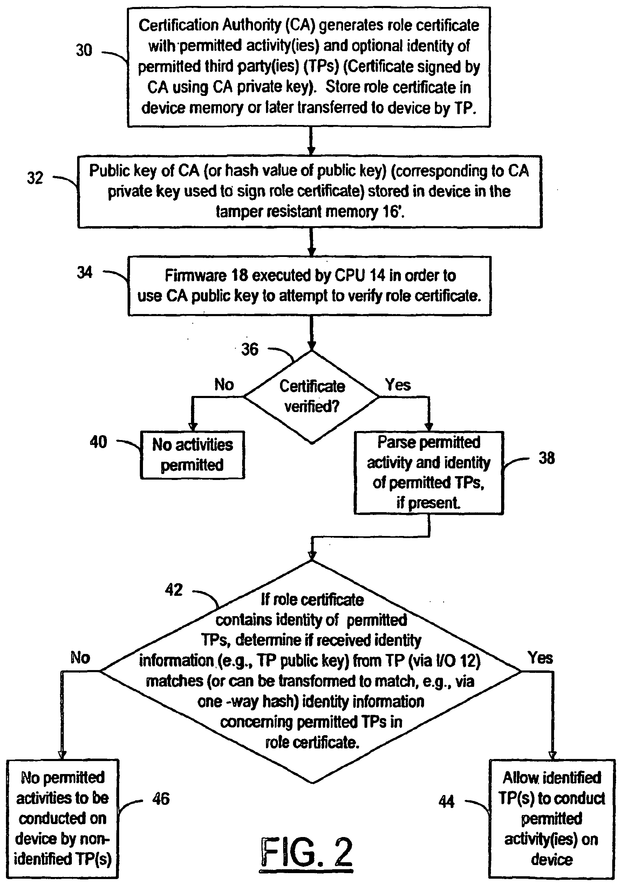

Figure 2 is a flow chart showing the various steps for performing generation and use of device specific role certificates such as for use with mobile phones. Thus in step 30, a Certification Authority (CA) generates a role certificate for a specific device, such as a specific mobile phone. The role certificate can be stored in the memory at the time the device is manufactured or it can be distributed to any third party for the third party's use in later communication with the specified mobile phone.

As seen in Figure 2, at step 30, the Certification Authority (CA) generates a role certificate with at least one permitted activity identified within that certificate and optionally including the identity of permitted third parties (TPs) who may have the right to perform such activities with respect to the device or who have rights with respect to downloading, installing and/or running code in the device. At step 32, the public key of the CA (or preferably the hash value of this pubic key), which corresponds to the CA private key used to sign the role certificate, is stored in the device in the tamper resistant memory **16'**. The storing of the CA public key (or hash value) in memory **16'** can be done at any time prior to or after generation of the role certificate. One or more CA public keys (or hash values of these public keys) can be stored in the device in the tamper resistant memory area and likewise, one or more role certificates can be generated which pertain to a specific device. The CA public key(s) (or hash values) should be stored in tamper resistant memory **16'** in order to prevent TPs from attempting to store their own public keys in the device.

A tamper resistant memory **16'** means some form of memory that can be interrogated to determine if information stored therein has been modified. Firmware **18** can contain code to direct CPU **14** to perform such an interrogation, or such interrogation can be performed remotely via communication with the mobile phone, such as via port **13**.

Other forms of tamper resistance can be used; such as, information storage (or code) obfuscation within the phone or operating system code in the telephone to resist memory changes. Such techniques are not considered to be as efficacious as tamper resistant memory **16'.**

As seen in step 34, the firmware **18** in the device is executed by CPU **14.** One of the functions of the firmware is to control the CPU in order to allow the CPU to use the CA public key (or hash value) stored in tamper resistant memory **16'** in order to attempt to verify a role certificate which has been stored in the device or which has been received by the device from a third party via I/O module **12** and port **13.** If the hash value of the CA public key is stored in tamper resistant memory **16',** then the firmware causes the CPU to hash a CA pubic key (such as received via port **13**) using same hashing algorithm used to generate the initial hash of the CA public key, and thereby to determine if the hash value matches the hash value in tamper resistant memory **16'**. If the hash values are the same, then the CA public key is used to verify the role certificate (step 36).

At step 36, a decision is made concerning verification of the role certificate. If verified, then at step 38 the permitted activity information, as well as the optional identity of permitted third parties, are parsed from the certificate. This is also performed by CPU **14** under direction of firmware **18**. If the role certificate is not verified, then no activities with respect to the device are permitted (see step 40).

If one or more third parties have been identified in the role certificate, then it is also necessary that the firmware determine if a third party communicating with the device via I/O module **12** matches at least one third party identified in the certificate (step 42). If a match is found, then the parsed activity in step 38 is permitted with respect to the identified third parties. This is shown in step 44. Otherwise, no permitted activities are allowed with respect to the non-identified third parties (see step 46).

With respect to identifying third parties in the role certificate, this can be done by storing a public key of the third party in the certificate and later determining if the received public key from the third party matches that within the certificate. The storing of the third party public key can preferably be done by storing a hash of the third party public key and then performing a hash of the received public key from the third party (using the same algorithm as used to store the hash value of the third party public key in the certificate) so as to determine if the two hashes are identical. If they are, then the identity of the third party is assumed to be correct.

If the third party is allowed to perform permitted activities, the activities can be conducted through the I/O module **12** and port **13**.

It should be noted that the role certificate can identify any type of permitted activity that can be performed on the device, for instance, such activities can provide for the acceptance of computer code from a third party. Thus the role certificate may allow for test code to be received from a third party and for that code to be installed and/or run on the mobile phone. Alternatively, the role certificate can provide for the acceptance of production computer code, again with further allowance of installation and/or running of that code on the specific mobile phone.

Other types of special code can also be provided, depending upon the needs of the development of the phone. Depending upon the activity or activities to be allowed on the specific mobile phone in view of the role certificate, it may be necessary for the mobile phone to further interact with the third party **22** (through, for instance, port **13** - see Figure 1) in order to allow those activities to be performed; such as, the receipt of further data or parameters for use with regard to received code.

As see in Figure 1, the permitted activity may also be the use of a debugging facility **20** within the phone by the TP or to allow the TP to use an external debugging facility **20'** connected to the phone via e.g. port **13**. Thus a flexible and relatively secure method and apparatus have been described which allows the manufacturer of a device to generate role certificates which when read by the device, provide for specified permitted activities (ies) to be performed on the device. The role certificate is therefore the vehicle to allow others to perform such specified activity(ies) on only those device which the manufacturer has previously stored its corresponding CA public key necessary to read the role certificate.

## Claims

1. A method to allow at least one party to perform at least one permitted activity with respect to a device (10), comprising the steps of:
embedding a role certificate in said device, wherein the role certificate identifies said at least one permitted activity which can be activated within the device and wherein the role certificate is generated by a Certification Authority; and
embedding information regarding a public key in said device, the public key corresponding to the private key used by the Certification Authority to sign the role certificate, wherein the device is configured to verify the role certificate using said information regarding the Certification Authority public key so that said at least one permitted activity can be activated within the device by said at least one party if the role certificate is verified, wherein the device is a mobile phone.

2. A method as defined in claim 1, wherein the role certificate includes information regarding a control security level for said device (10) so that the device (10) only allows said at least one permitted activity to be a type of action which is within the security level of the device as defined by the role certificate.

3. A method as defined in claim 2, wherein the security level defined by the role certificate allows a type of software code to be downloaded, and/or installed, and/or run on said device by said at least one party.

4. A method as defined in claim 3, wherein the type of software code is from the group of types of software code consisting of test code, production code and special code.

5. A method as defined in claim 4, wherein the special code can be code linked to a specific at least one party.

6. A method as defined in claim 3, wherein the role certificate further contains information with regard to a specific party of said at least one party that can download, and/or install and/or run said type of software code.

7. A method as defined in any preceding claim, wherein the role certificate further contains information with regard to a specific party of said at least one party that can activate the at least one permitted activity within the device (10).

8. A method as defined in claim 7, wherein said information with regard to a specific party is a hash of information identifying said specific party's public key, and wherein the device validates said specific party by receiving said information identifying said specific party's public key, and hashing this information and comparing the hash value to the hash value contained in the role certificate so that if the hash values are equal, then the specific party is permitted to activate the at least one permitted activity.

9. A method as defined in claim 7 or claim 8, wherein said specific party is a group of entities.

10. A method as defined in any preceding claim, wherein the embedding of the role certificate into the device is performed after the information regarding the public key of the Certification Authority is embedded into the device (10).

11. A method as defined in any preceding claim, wherein the information regarding the Certification Authority public key is embedded in the device (10) in a tamper resistant area (16') of memory (16).

12. A method as defined in claim 11, wherein the tamper resistant area (16') of the memory (16) is configured such that any modification of information stored therein can be ascertained.

13. A method as defined in claim 1, wherein the permitted activity is the use of a debugging facility (20) within said device (10).

14. A method as defined in any preceding claim, wherein the Certification Authority is a root Certification Authority.

15. A method as defined in any preceding claim, wherein the role certificate contains any use limitation with respect to said at least one permitted activity.

16. A method as defined in claim 15, wherein said any use limitation includes a time limitation with respect to activating said at least one permitted activity.

17. A method as defined in any preceding claim, wherein said information regarding the Certification Authority public key is a hash value of said Certification Authority public key.

18. A method as defined in any preceding claim, further comprising embedding at least one different role certificate in said device (10).

## Patentansprüche

1. Verfahren, um es wenigstens einer Partei zu gestatten, wenigstens eine zugelassene Aktivität im Zusammenhang mit einer Vorrichtung (10) auszuführen, wobei es die folgenden Schritte umfasst:
Einbinden eines Rollenzertifikats in die Vorrichtung, wobei das Rollenzertifikat die wenigstens eine zugelassene Aktivität identifiziert, die innerhalb der Vorrichtung aktiviert werden kann, und wobei das Rollenzertifikat von einer Zertifizierungsstelle erzeugt wird; und
Einbinden von Information in die Vorrichtung, die einen öffentlichen Schlüssel betrifft, wobei der öffentliche Schlüssel zu dem privaten Schlüssel gehört, der von der Zertifizierungsstelle verwendet wird, um das Rollenzertifikat zu signieren, wobei die Vorrichtung dafür eingerichtet ist, das Rollenzertifikat unter Verwendung der Information, die den öffentlichen Schlüssel der Zertifizierungsstelle betrifft, zu überprüfen, so dass die wenigstens eine zugelassene Aktivität innerhalb der Vorrichtung durch die wenigstens eine Partei aktiviert werden kann, falls das Rollenzertifikat bestätigt wird, wobei die Vorrichtung ein Mobiltelefon ist.

2. Verfahren nach Anspruch 1, wobei das Rollenzertifikat eine Information umfasst, die eine Steuerung eines Sicherheitsniveaus für die Vorrichtung (10) betrifft, so dass die Vorrichtung (10) die wenigstens eine zugelassene Aktivität darauf einschränkt, ein Typ von Vorgang zu sein, der innerhalb des Sicherheitsniveaus der Vorrichtung liegt, wie dieses durch das Rollenzertifikat festgelegt wird.

3. Verfahren nach Anspruch 2, wobei das durch das Rollenzertifikat definierte Sicherheitsniveau es gestattet, einen Typ von Softwarecode durch die wenigstens eine Partei auf die/der Vorrichtung herunterzuladen und/oder zu installiert und/oder auszuführen.

4. Verfahren nach Anspruch 3, wobei der Typ von Softwarecode aus der Gruppe von Typen von Softwarecode ist, die aus Folgendem besteht: Testcode, Produktionscode und Spezialcode.

5. Verfahren nach Anspruch 4, wobei der Spezialcode Code sein kann, der zu wenigstens einer Partei gehört, die speziell ist.

6. Verfahren nach Anspruch 3, wobei das Rollenzertifikat außerdem eine Information umfasst, die eine spezielle Partei von der wenigstens einen Partei betrifft, die den Typ von Softwarecode herunterladen und/oder installieren und/oder ausführen kann.

7. Verfahren nach einem der vorhergehenden Ansprüche, wobei das Rollenzertifikat außerdem Information umfasst, die eine spezielle Partei von der wenigstens einen Partei betrifft, die die wenigstens eine zugelassene Aktivität innerhalb der Vorrichtung (10) aktivieren kann.

8. Verfahren nach Anspruch 7, wobei die Information, die eine spezielle Partei betrifft, Hashdaten zu einer Information sind, die den öffentlichen Schlüssel der speziellen Partei betrifft, und wobei die Vorrichtung die spezielle Partei bestätigt, indem sie die Information empfängt, die den öffentlichen Schlüssel der speziellen Partei identifiziert, und auf dieser Information eine Hashfunktion ausführt und den Hashwert mit dem Hashwert vergleicht, der im Rollenzertifikat enthalten ist, so dass, falls die Hashwerte gleich sind, es der speziellen Partei gestattet ist, die wenigstens eine zugelassene Aktivität zu aktivieren.

9. Verfahren nach Anspruch 7 oder Anspruch 8, wobei die spezielle Partei eine Gruppe von Entitäten ist.

10. Verfahren nach einem der vorhergehenden Ansprüche, wobei das Einbinden des Rollenzertifikats in die Vorrichtung ausgeführt wird, nachdem die Information, die den öffentlichen Schlüssel der Zertifizierungsstelle betrifft, in die Vorrichtung (10) eingebunden wurde.

11. Verfahren nach einem der vorhergehenden Ansprüche, wobei die Information, die den öffentlichen Schlüssel der Zertifizierungsstelle betrifft, in einem manipulationssicheren Bereich (16') eines Speichers (16) in die Vorrichtung (10) eingebunden wird.

12. Verfahren nach Anspruch 11, wobei der manipulationssichere Bereich (16') des Speichers (16) so eingerichtet ist, dass jede Veränderung an darin gespeicherter Information festgestellt werden kann.

13. Verfahren nach Anspruch 1, wobei die zugelassene Aktivität die Verwendung einer Debug-Einrichtung (20) innerhalb der Vorrichtung (10) ist.

14. Verfahren nach einem der vorhergehenden Ansprüche, wobei die Zertifizierungsstelle eine Root-Zertifizierungsstelle ist.

15. Verfahren nach einem der vorhergehenden Ansprüche, wobei das Rollenzertifikat eine beliebige Nutzungseinschränkung für die wenigstens eine zugelassene Aktivität umfasst.

16. Verfahren nach Anspruch 15, wobei die beliebige Nutzungseinschränkung eine Zeiteinschränkung für die Aktivierung der wenigstens einen zugelassenen Aktivität umfasst.

17. Verfahren nach einem der vorhergehenden Ansprüche, wobei die Information, die den öffentlichen Schlüssel der Zertifizierungsstelle betrifft, ein Hashwert für den öffentlichen Schlüssel der Zertifizierungsstelle ist.

18. Verfahren nach einem der vorhergehenden Ansprüche, das außerdem das Einbinden wenigstens eines anderen Rollenzertifikats in die Vorrichtung (10) umfasst.

## Revendications

1. Procédé destiné à autoriser au moins une partie à mettre en oeuvre au moins une activité permise relativement à un dispositif (10), comprenant les étapes ci-dessous consistant à :
intégrer un certificat de rôle dans ledit dispositif, dans lequel le certificat de rôle identifie ladite au moins une activité permise qui peut être activée dans le dispositif et dans lequel le certificat de rôle est généré par une autorité de certification ; et
intégrer des informations concernant une clé publique dans ledit dispositif, la clé publique correspondant à la clé privée utilisée par l'autorité de certification pour signer le certificat de rôle, dans lequel le dispositif est configuré de manière à vérifier le certificat de rôle en utilisant lesdites informations concernant la clé publique de l'autorité de certification, de sorte que ladite au moins une activité permise peut être activée dans le dispositif par ladite au moins une partie si le certificat de rôle est vérifié, dans lequel le dispositif est un téléphone mobile (10).

2. Procédé selon la revendication 1, dans lequel le certificat de rôle inclut des informations concernant un niveau de sécurité de commande pour ledit dispositif (10), de sorte que le dispositif (10) n'autorise ladite au moins une activité permise qu'à être un type d' action qui se situe au sein du niveau de sécurité du dispositif tel que défini par le certificat de rôle.

3. Procédé selon la revendication 2, dans lequel le niveau de sécurité défini par le certificat de rôle permet à un type de code logiciel d'être téléchargé et/ou installé, et/ou exécuté sur ledit dispositif par ladite au moins une partie.

4. Procédé selon la revendication 3, dans lequel le type de code logiciel est sélectionné dans le groupe de types de code logiciel comportant : un code de test, un code de production et un code spécial.

5. Procédé selon la revendication 4, dans lequel le code spécial peut être lié par un code à au moins une partie spécifique.

6. Procédé selon la revendication 3, dans lequel le certificat de rôle contient en outre des informations connexes à une partie spécifique de ladite au moins une partie pouvant télécharger et/ou installer et/ou exécuter ledit type de code logiciel.

7. Procédé selon l'une quelconque des revendications précédentes, dans lequel le certificat de rôle contient en outre des informations connexes à une partie spécifique de ladite au moins une partie pouvant activer ladite au moins une activité permise au sein du dispositif (10).

8. Procédé selon la revendication 7, dans lequel lesdites informations connexes à une partie spécifique représentent un hachage d'informations identifiant ladite clé publique de la partie spécifique, et dans lequel le dispositif valide ladite partie spécifique en recevant lesdites informations identifiant ladite clé publique de la partie spécifique, en hachant lesdites informations, et en comparant la valeur de hachage à la valeur de hachage contenue dans le certificat de rôle, de sorte que si les valeurs de hachage sont identiques, la partie spécifique est alors autorisée à activer ladite au moins une activité permise.

9. Procédé selon la revendication 7 ou 8, dans lequel ladite partie spécifique est un groupe d'entités.

10. Procédé selon l'une quelconque des revendications précédentes, dans lequel l'intégration du certificat de rôle dans le dispositif est mise en oeuvre après que les informations concernant la clé publique de l'autorité de certification sont intégrées dans le dispositif (10) .

11. Procédé selon l'une quelconque des revendications précédentes, dans lequel les informations concernant la clé publique de l'autorité de certification sont intégrées dans le dispositif (10) au sein d'une zone inviolable (16') d'une mémoire (16).

12. Procédé selon la revendication 11, dans lequel la zone inviolable (16') de la mémoire (16) est configurée de sorte que toute modification des informations qui y sont stockées peut être déterminée.

13. Procédé selon la revendication 1, dans lequel l'activité permise est l'utilisation d'une fonction de débogage (20) au sein dudit dispositif (10).

14. Procédé selon l'une quelconque des revendications précédentes, dans lequel l'autorité de certification est une autorité de certification racine.

15. Procédé selon l'une quelconque des revendications précédentes, dans lequel le certificat de rôle contient toute limitation d'usage relativement à ladite au moins une activité permise.

16. Procédé selon la revendication 15, dans lequel ladite limitation d'usage comprend une limitation temporelle relativement à l'activation de ladite au moins une activité permise.

17. Procédé selon l'une quelconque des revendications précédentes, dans lequel lesdites informations concernant la clé publique de l'autorité de certification représentent une valeur de hachage de ladite clé publique de l'autorité de certification.

18. Procédé selon l'une quelconque des revendications précédentes, comprenant en outre l'intégration d'au moins un certificat de rôle distinct dans ledit dispositif (10).
